# EUROPÄISCHE PATENTSCHRIFT

(11) **EP 0 942 633 B1**
(45) Veröffentlichungstag und Bekanntmachung des Hinweises auf die Patenterteilung: **22.05.2002**
(21) Anmeldenummer: 99102631.1
(22) Anmeldetag: 11.02.1999
(51) Int. Cl.: H05B 41/00, A61C 19/00

(54) **Regelkreis für ein Lichthärtgerät**
Controller for a light curing apparatus
Contrôleur de lampe de polymérisation

(30) Priorität: 11.03.1998 DE 19810573
(43) Veröffentlichungstag der Anmeldung: 15.09.1999
(73) Patentinhaber: Ivoclar Vivadent AG, 9494 Schaan (LI)
(72) Erfinder: Rohner, Gottfried,, 9450 Altstätten (LI); Senn, Bruno, 9470 Buchs (LI); Fritsche, Gregor, 9450 Altstätten (LI)
(74) Vertreter: Splanemann Reitzner Baronetzky Westendorp Patentanwälte

(56) Entgegenhaltungen:
- EP-A- 0 166 364
- EP-A- 0 508 526
- WO-A-90/01247
- US-A- 5 471 129
- PATENT ABSTRACTS OF JAPAN vol. 097, no. 007, 31. Juli 1997 & JP 09 069395 A (TOSHIBA LIGHTING &TECHNOL CORP; TOSHIBA AVE CORP), 11. März 1997

## Beschreibung

Die Erfindung betrifft ein Lichthärtgerät, gemäß dem Oberbegriff von Anspruch 1.

Es sind verschiedene netzgestützte Lichthärtgeräte bekannt geworden, die für die Lichtpolymerisation von Dentalmaterialien einsetzbar sind, und bei denen ein Handgerät die Lichtquelle aufnimmt, das über ein Kabel mit einer Speisestation verbunden ist. Derartige Lichthärtgeräte weisen gegenüber akkugestützten Lichthärtgeräten den Vorteil auf, daß eine höhere Lichtleistung bereitgestellt werden kann, und daß das Handgerät selbst meist leichter ist, nachdem das Gewicht eines Akkumulators entfallen kann.

Bei bekannten Lichthärtgeräten ist die Speisespannung für die Lichtquelle in der Speisestation in sich bekannter Weise über einen Spannungsregler stabilisiert. Bei diesen Lichthärtgeräten wird davon ausgegangen, daß eine Spannungsstabilisierung über die Lebensdauer der Lichtquelle betrachtet ausreicht, um ausreichend Lichtleistung zur Verfügung zur stellen. Zusätzlich ist es bekannt geworden, die Lichtleistung, die von dem Handgerät abgegeben wird, zu messen, wobei ein Beispiel für ein derartiges Lichthärtgerät aus der DE-GM 92 12 892 ersichtlich ist. Bei diesem Lichthärtgerät ist die Speisestation mit einem Lichtsensor ausgestattet, der dann ansprechen soll, wenn das erfaßte Licht hell genug ist.

Bei dieser Lösung ist jedoch nachteilig, daß die Überprüfung, ob das Lichthärtgerät noch ordnungsgemäß funktioniert, in die Verantwortung und damit in das Belieben des Benutzers gelegt wird. Dementsprechend wirken sich unterschiedliche Grade des Verantwortungsbewußtseins stark auf die Zuverlässigkeit des Geräts aus, so daß die Hersteller derartiger Geräte empfehlen, sicherheitshalber etwa alle 100 Betriebsstunden die Lichtquelle auszutauschen.

Lichtquellen, die beispielsweise als Halogenlampen ausgebildet sein können, sind zwar Verbrauchsgegenstände. Dennoch bestehen erhebliche Qualitätsunterschiede und damit Unterschiede in der Lebensdauer. Beispielsweise kann bei gleichen Betriebsparametern eine Lichtquelle mit hochwertiger Wendel, die aus gleichmäßig starkem Draht besteht und ganz gleichmäßig gewickelt ist, durchaus die dreifache Lebensdauer einer weniger qualitativ hochwertigen Lichtquelle erreichen, wobei bei den bekannten Geräten die verbesserte Lebensdauer gerade hochwertiger Lichtquellen, die meist auch ein gut definiertes Spektrum abgeben, nicht ausgenutzt werden kann.

Ein weiterer Nachteil bekannter Lichthärtgeräte besteht darin, daß sie schlecht an die örtlichen Besonderheiten bestehender Zahnarztpraxen angepaßt werden können. Während es in manchen Praxen günstiger wäre, die Speisestation unmittelbar dem Handgerät benachbart anzuordnen, so daß ein kurzes Kabel ausreichen würde, sind in anderen Praxen die örtlichen Gegebenheiten so, daß eine stark beabstandete Anordnung von Speisestation und Handgerät günstiger wäre.

Diesen Bedürfnissen der Praxis kann mit den bekannten Lichthärtgeräten nur in begrenztem Umfang Rechnung getragen werden. Die Kabellänge darf eine bestimmte Länge nicht überschreiten, um nicht die bereitzustellende Lichtleistung zu gefährden. Andererseits sollte das Kabel auch nicht zu dick sein, um die erwünschte Flexibilität und Biegbarkeit nicht zu beeinträchtigen, so daß bislang meist eine recht begrenzte Minimal- und Maximallänge für das Kabel vorgeschrieben wird. Zudem muß bislang bei der Bestellung des Lichthärtgeräts das Kabel in der erwünschten Länge angegeben werden, und sogar meist vom Her-. steller eine Anpassung der Lichtquellenregelung an die Kabellänge vorgenommen werden, so daß bei einer Änderung der räumlichen Verhältnisse, oder wenn sich herausstellt, daß die zunächst bestellte Kabellänge doch nicht ausreicht, ein aufwendiger Umtausch mit Eingriffen des Kundendiensttechnikers in das Gerät erforderlich ist.

Daher liegt der Erfindung die Aufgabe zugrunde, ein Lichthärtgerät gemäß dem Oberbegriff von Anspruch 1 zu schaffen, das eine verbesserte Wirtschaftlichkeit bietet und flexibler einsetzbar ist.

Diese Aufgabe wird erfindungsgemäß durch Anspruch 1 gelöst. Vorteilhafte Weiterbildungen ergeben sich aus den Unteransprüchen.

Überraschend ergibt das erfindungsgemäße Lichthärtgerät eine wesentlich verbesserte Ausnützung der Lichtquellen, so daß es sich empfiehlt, qualitativ hochwertige Lichtquellen einzusetzen, die eine längere Lebensdauer aufweisen, so daß die Wartungsintervalle für das Lichthärtgerät deutlich, beispielsweise auf die dreifache Zeit, verlängert werden können. Die erfindungsgemäße Leistungsregelung läßt sich hierbei besonders günstig ausnutzen, indem nämlich erfindungsgemäß eine Spannungsnachführung entsprechend dem Innenwiderstand der Lichtquelle vorgenommen wird.

Die Zunahme des Innenwiderstands wird automatisch beobachtet, wobei gemäß einer bevorzugten Ausgestaltung eine Signalisierung erfolgt, wenn die Spannungsnachführung keine dem Innenwiderstand gerecht werdende Spannung mehr abgeben kann, was gleichbedeutend mit der Notwendigkeit eines Lampenwechsels ist. Die erforderliche Solleistung kann in diesem Fall nicht mehr abgegeben werden. Diese Ausgestaltung erlaubt mit besonders einfachen, aber auch besonders wirksamen Mitteln eine Lebensdauerüberwachung, die an die Veränderung der Wolframwendel angepaßt ist, so daß nicht sicherheitshalber ein beträchtlicher, an sich zur Verfügung stehender Anteil der Lebensdauer der Lichtquelle verschenkt wird.

Durch Einbeziehung des Kabels läßt sich nicht nur eine genauere Stabilisierung der Abgabe der Lichtleistung erzielen, sondern insbesondere ist auch die vom Kundendienst vorzunehmende Anpassung des Lichthärtgeräts an die gewünschte Kabellänge entbehrlich: die Leistungsregelung erfaßt unmittelbar an der Lichtquelle Spannung und Strom, also deren Betriebsparameter, und nimmt eine Regelung im Bereich der Speisestation, die das Stellglied aufweist, vor. Hierzu nimmt das Kabel eine zusätzliche Steuerleitung auf, die sehr dünn gehalten sein kann und daher die Flexibilität des Kabels nicht beeinträchtigt. Vielmehr ist es erfindungsgemäß besonders günstig, daß mit vergleichsweise dünnen und damit flexiblen Kabeln gearbeitet werden kann, nachdem deren Innenwiderstand voll ausgeregelt wird.

Gemäß einer besonders günstigen Ausgestaltung ist es zudem vorgesehen, daß das Kabel steckbar gelagert ist, so daß der Zahnarzt oder sein Hilfspersonal selbst eine Anpassung des Lichthärtgeräts an die gewünschte Kabellänge vornehmen kann. Derartige Kabel können vorkonfektioniert angeboten werden, wobei es bei der Verwendung genormter Stecker und Buchsen sogar möglich ist, industriell vorgefertigte Standardkabel zu verwenden, die sich preisgünstig beschaffen lassen.

In einer günstigen Ausgestaltung ist es vorgesehen, eine von der geregelten Ausgangsspannung für die Versorgung der Lampe unabhängige zweite geregelte Hilfs-Speisespannung bereitzustellen, die der Versorgung von Hilfselementen wie von dem Gebläse und dergleichen dient und über eine Speisespannungsleitung im Kabel übermittelt wird.

Mit der unabhängigen Hilfs-Speisespannungsleitung läßt sich eine Verbesserung der Linearität der Regelkennlinie für die Ausgangsspannung, also die Versorgung der Lichtquelle, erzielen, wobei zudem das Einschalten von Hilfselementen den Regelkreis nicht stört.

Weitere Einzelheiten, Vorteile und Merkmale ergeben sich aus der nachfolgenden Beschreibung eines Ausführungsbeispiels anhand der Zeichnungen.

Es zeigen:
- Fig. 1: eine perspektivische Ansicht eines erfindungsgemäßen Lichthärtgeräts in einer Ausführungsform;
- Fig. 2: ein Blockschaltbild zur Darstellung des elektrischen Aufbaus des Lichthärtgeräts in der Ausführungsform gemäß Fig. 2; und
- Fig. 3: eine Kennlinie zur Darstellung des Softstarts für ein erfindungsgemäßes Lichthärtgerät.

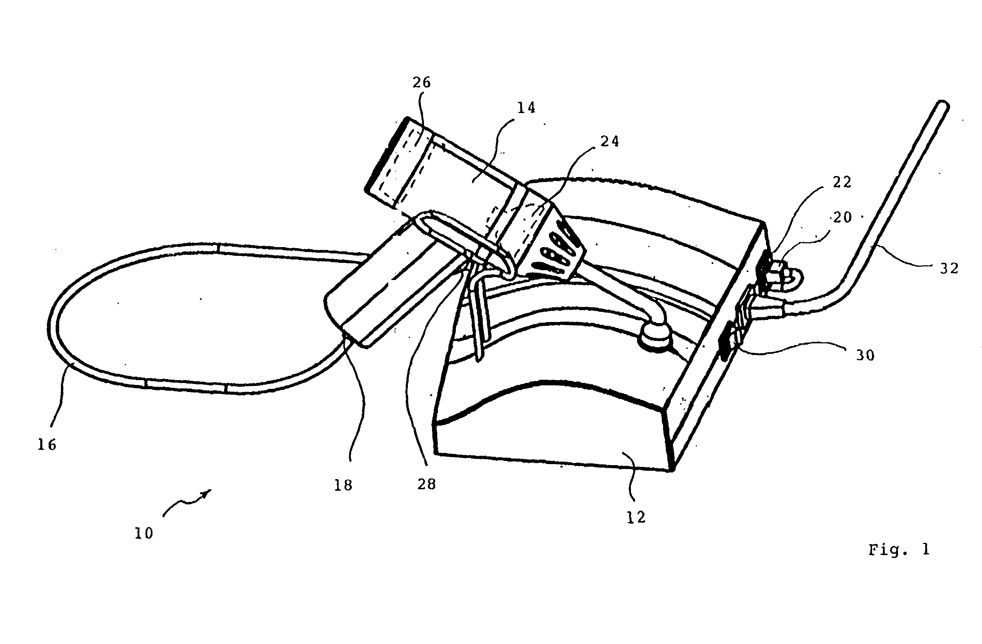

Das in Fig. 1 dargestellte Lichthärtgerät 10 weist eine Speisestation 12 und ein Handgerät 14 auf, die über ein Kabel 16 miteinander verbunden sind. Das Kabel 16 weist an seinen Enden Stecker 18 und 20 auf, die je in betreffende Buchsen in dem Handgerät 14 und in der Speisestation 12 einsteckbar sind. Die Buchse 22 an der Speisestation 12 ist aus Fig. 1 ersichtlich.

Das Kabel 16 ist als mehradriges und hochflexibles Kabel ausgebildet und - wie Fig. 1 zeigt - ziemlich dünn. Sein Gewicht beeinträchtigt damit die Handhabung des Handgeräts 14 nur in sehr geringem Umfang, während bislang verwendete Kabel auch bei einer vergleichsweise großen Flexibilität aufgrund der eingesetzten Kupfermengen ziemlich schwer waren.

Das Handgerät 14 weist im wesentlichen eine Pistolenform auf und nimmt eine Lichtquelle 24 und ein Gebläse 26 auf, die gestrichelt angedeutet sind. Zudem ist ein Start-Stopp-Schalter vorgesehen, von dem ein Einschaltknopf 28 aus Fig. 1 ersichtlich ist.

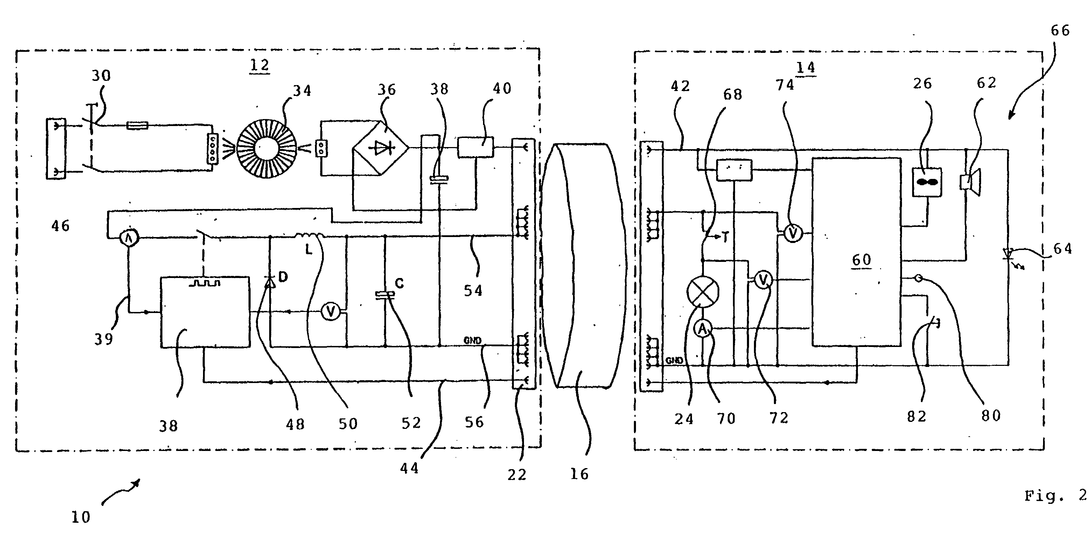

Aus Fig. 2 ist ein für das erfindungsgemäße Lichthärtgerät 10 vorgesehener Schaltkreis als Blockschaltbild ersichtlich. Die Speisestation 12 weist in an sich bekannter Weise einen Netzschalter 30 auf, der über ein aus Fig. 1 ersichtliches Netzkabel 32 versorgt wird. Die Netzspannung wird über einen Ringkerntransformator 34 auf Sekundärspannung gebracht, die über einen Gleichrichter 36 gleichgerichtet und über einen Kondensator 38 geglättet wird. Die geglättete Spannung ausgangsseitig des Gleichrichters 36 bildet eine Eingangsspannung, die als Regelvorspannung 39 bezeichnet wird, sowohl für eine Regelschaltung 38, die weiter unten im einzelnen beschrieben wird, als auch für einen Festspannungsregler 40, der eine Hilfs-Speisespannung 42 bereitsstellt, die über das Kabel 16 zum Handgerät 14 übertragen wird.

Der Regelschaltkreis 38 weist einen Schaltregler auf, der an die Regelvorspannung 39 angeschlossen ist und ansprechend auf ein analoges Steuersignal aus einer Steuerleitung 44, die das Kabel 16 durchläuft, ein Regelelement 46 schaltet. Mit dieser Art der Regelung läßt sich eine verlustarme Versorgung sicherstellen, während es grundsätzlich auch möglich wäre, anstelle der Schaltregelung auch eine reine Längsregelung vorzusehen. Das Regelelement 46 ist bevorzugt als Feldeffekttransistor FET ausgebildet, das an die Regelvorspannung 39 angeschlossen ist. Die Ausgangsspannung 54 des Regelelements 46 weist in an sich bekannter Weise ein je nach Regelerfordernis vorgegebenes Impuls-Pausen-Verhältnis auf, so daß im wesentlichen eine Rechteck- oder Trapezspannung vorliegt. Im eingeschalteten Zustand beträgt sie die Regelvorspannung 39 abzüglich des Spannungsabfalls über den FET 46. Über eine Diode 48 läßt sich ein negatives Überschwingen der Schaltspitzen vermeiden, wobei es sich versteht, daß über eine entsprechende, an die Eingangsspannung 39 angeschlossene Diode auch ein positives Überschwingen bei Bedarf vermeidbar ist. Der Ausgangsstrom des Regelelements 46 wird über eine Spule 50 etwas und über einen Siebkondensator 52 so stark geglättet, daß die Ausgangs-spannung 54 mit der geforderten geringen Welligkeit bereitgestellt und dem Kabel 16 zugeleitet werden kann.

Zusätzlich zu dem erfindungsgemäßen Regelkreis ist bevorzugt ein zweiter Leistungsregelkreis unmittelbar dem Schaltregler 38 benachbart ausgebildet. Mit diesem Regelkreis wird der Eingangsstrom auf der die Regelvorspannung bereitstellenden Leitung sowie die Ausgangsspannung des Regelelements 46 erfaßt und in die Regelung einbezogen.

Das Kabel 16 ist in dem dargestellten Ausführungsbeispiel zehnadrig ausgebildet, wobei im Grunde jedoch auch lediglich vier Adern ausreichen. Eine Ader ist für die Übermittlung der Hilfs-Speisespannung 42 bestimmt. Eine weitere Ader ist für die Steuerleitung 44 bestimmt. Die verbleibenden Adern sind aufgeteilt auf die Kontakte für die Ausgangsspannung 54 und für Masse 56, wobei im Beispielsfalle je vier Adern für diese Leitungen verwendet werden. Es versteht sich, daß hier in weiten Bereichen eine Anpassung vorgenommen werden kann. Bei Bedarf kann auch auf der Handgerät-Seite des Kabels 16 ein weiterer Siebkondensator zwischen Ausgangsspannung 54 und Masse 56 geschaltet sein, wobei dann der Innenwiderstand des Kabels 16 zusätzlich die Glättung der Ausgangsspannung verbessert.

Das Handgerät 14 verwendet die Hilfs-Speisespannung 42 für die Spannungsversorgung einer Auswerteschaltung 60, für die Spannungsversorgung des Gebläses 26, für die Spannungsversorgung einer Signalisierungseinrichtung 62, die als Piezo-Summer ausgebildet ist, sowie für die Spannungsversorgung einer Betriebsanzeige-LED 64. Diese Hilfselemente 66 sind damit aus dem Regelkreis herausgenommen und beeinträchtigen nicht dessen Linearität.

Die Lichtquelle 24 ist über einen Thermoschalter 68, der als Sicherheits-Abschaltelement dient, und über einen Stromfühler 70 an die Ausgangsspannung 54 und Masse 56 auf der Sekundärseite des Kabels 16, also im Handgerät 42, angeschlossen. Der Stromfühler 70 weist einen Strommeßwiderstand mit einem Widerstandswert auf, der an die vorgegebene Lampenleistung angepaßt ist. Wenn beispielsweise eine Lampenleistung von 75 Watt verwendet wird, kann der Widerstand des Stromfühlers 70 0,025 Ohm betragen. Der durch den Lichtquellenstrom erzeugte Spannungsabfall über den Meßwiderstand wird von dem Stromfühler 70 erfaßt und der Auswerteschaltung 60 zugeleitet.

Ferner ist ein Spannungsfühler 72 vorgesehen, der die Klemmenspannung der Lichtquelle 24 erfaßt, sowie ein weiterer Spannungsfühler 74, der unmittelbar an die Ausgangsspannung 54 angeschlossen ist, so daß die Auswerteschaltung 60 auch ein Ansprechen des Thermoschalters 68 aufgrund einer Differenz der Ausgangssignale der Spannungsfühler 72 und 74 erfassen kann.

Die Auswerteschaltung 60 bildet ein Produkt der erfaßten Spannungs- und Stromwerte der Fühler 70 und 72 und ist an die Steuerleitung 44 angeschlossen, die mit einem entsprechenden Ausgangssignal beaufschlagt wird, so daß die Regelschaltung 38 in der Speisestation 12 eine Regelung der Ausgangsspannung 54 entsprechend der Leistungsvorgabe der Auswerteschaltung 60 vornimmt.

Ferner ist eine Kalibriereinrichtung 80 vorgesehen. Die Kalibriereinrichtung 80 umfaßt einen Startkontakt für den Abgleich, bei welchem die genaue Größe des Meßwiderstands des Stromfühlers 70, aber auch die Linearität des Digital-/Analog-Wandlers in der Auswerteschaltung 60 erfaßt werden. Die Kalibriereinrichtung 80 umfaßt ferner ein EEPROM, das in der Auswerteschaltung 60 aufgenommen ist und die entsprechende Kalibrierkurve abgespeichert aufnimmt. Die Kalibrierung kann vollständig für das Handgerät 14 vorgenommen werden, so daß sie insbesondere unabhängig von der Art und Länge des verwendeten Kabels 16 ist.

Das Lichthärtgerät läßt sich über einen Start/Stopp-Taster 82 starten und stoppen, wobei der Taster 82 von dem Einschaltknopf 22 betätigbar ist. Es versteht sich, daß die Art der Erfassung der relevanten Spannungs- und Stromwerte in weiten Bereichen an die Erfordernisse angepaßt werden kann. Beispielsweise kann auch eine reine Analogregelung in der Auswerteschaltung 60 vorgenommen werden, die eine kontinuierliche Spannungsnachführung bewirkt. Hingegen reicht regelmäßig eine preisgünstig und flexibel zu realisierende Digitalregelung aus, wobei auch die Geschwindigkeitsanforderungen an den Digital-/Analog-Wandler begrenzt sind, nachdem beispielsweise eine Spannungsnachführung in Intervallen von 100Millisekunden ausreichend ist.

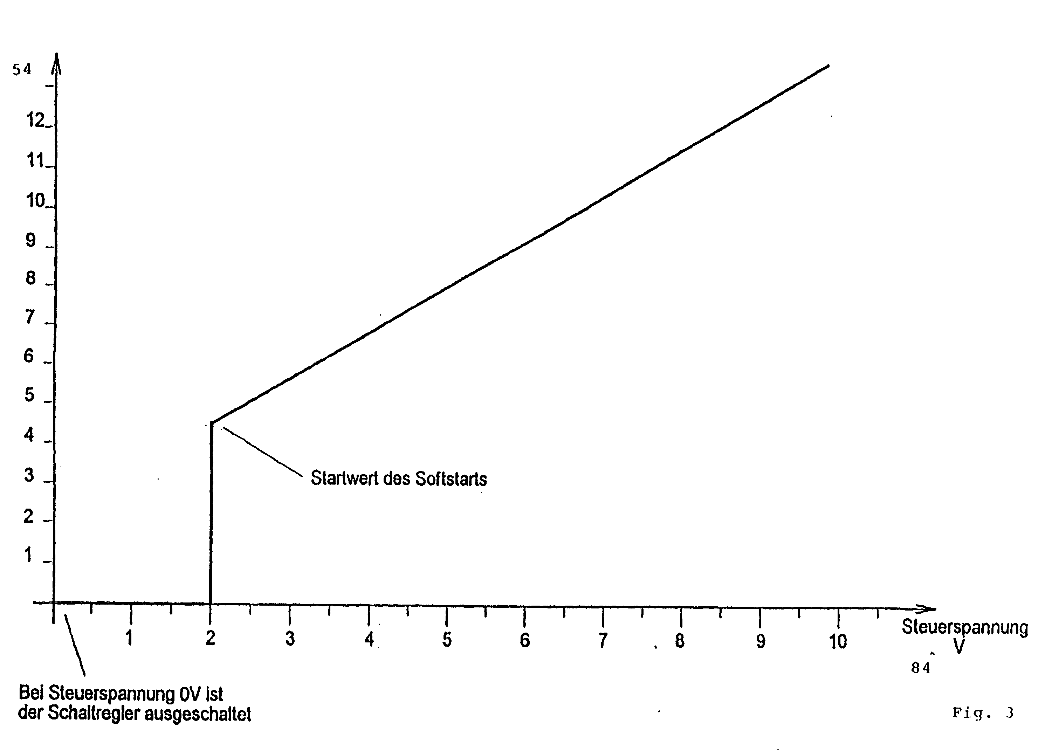

Erfindungsgemäß besonders günstig ist es, wenn über den Start/Stopp-Taster 82 ein sogenannter Softstart realisiert wird. Hierzu ist gemäß Fig. 3 beim Betätigen des Einschaltknopfs 28 eine vorgegebene Spannungskurve von der Auswerteschaltung 60 realisiert, die ein Hochfahren der Ausgangsspannung 54 innerhalb von beispielsweise 3 Sekunden verwirklicht. In Fig. 3 ist die Ausgangsspannung 54 über der Steuerspannung 84, die auf der Steuerleitung 44 anliegt, aufgetragen, und es ist ersichtlich, daß eine Steilheit von etwas mehr als 1 vorgegeben ist, die bei einem Schwellenwert von 2V beginnt. Unterhalb einer Steuerspannung von 2V ist der Regelschaltkreis 38 abgeschaltet, so daß bei ausgeschaltetem Start/Stopp-Taster 82 auch kein Kriechstrom durch die Lichtquelle 24 fließt.

Erfindungsgemäß können Strom und Spannung gleichzeitig gemessen werden, wobei hierunter auch eine Messung im Abstand von wenigen Nanosekunden zu verstehen ist. Bevorzugt erfolgen die Messungen in regelmäßigen Zeitabständen, deren Länge durch die Wandlungszeit des Digital-/Analog-Wandlers bestimmt ist. Es ist auch möglich, den Eingang des Wandlers zwischen Stromund Spannungsmessung umzuschalten, und so mit lediglich einem Wandler auszukommen. die Messun

## Patentansprüche

1. Lichthärtgerät, insbesondere für die Lichtpolymerisation von Dentalmassen, mit einem Handgerät mit Lichtquelle, das über ein Kabel mit einer Speisestation verbunden ist, wobei das Kabel insbesondere steckbar an das Handgerät und die Speisestation angeschlossen ist, und mit einer Regelung für die Lichtquelle für die Bereitstellung einer gleichmäßigen Lichtabgabe, wobei die Regelung als Leistungsregelung mit einer vorgegebenen Solleistung ausgebildet ist **dadurch gekennzeichnet, daß** das Kabel (16) im Regelkreis der Regelung angeordnet ist, und daß die Regelung ein Einschalten des Lichthärtgeräts (10) unterdrückt oder ein Signal abgibt, wenn die Solleistung eine Spannung, die eine Regelvorspannung (39) abzüglich eines Spannungsabfalls eines Regelelements (FET 46) übersteigt, oder einen entsprechenden Strom erfordert.

2. Lichthärtgerät nach Anspruch 1, **dadurch gekennzeichnet, daß** die Regelung einen Spannungsfühler (72) für die Erfassung der Klemmenspannung der Lichtquelle (24) und einen Stromfühler (70) für die Erfassung des Lichtquellenstroms aufweist, deren Signale über eine Auswerteschaltung (60) einer Steuerleitung (44) zuführbar sind, die durch das Kabel (16) verläuft.

3. Lichthärtgerät nach einem der vorhergehenden Ansprüche, **dadurch gekennzeichnet, daß** die Speisestation (12) einen Regelschaltkreis (38) aufweist, der insbesondere als Schaltregler ausgebildet ist und das Regelelement (FET 46) ansteuert und mit einer Steuerleitung (44) verbunden ist, die durch das Kabel (16) verläuft.

4. Lichthärtgerät nach einem der vorhergehenden Ansprüche, **dadurch gekennzeichnet, daß** das Handgerät (14) eine Kalibriereinrichtung (80) aufweist, die für die Kalibrierung des Stromfühlers (70), des Spannungsfühlers und der Auswerteschaltung (60), insbesondere eines Digital-/Analog-Wandlers in der Auswerteschaltung (60), ausgerüstet ist.

5. Lichthärtgerät nach einem der vorhergehenden Ansprüche, **dadurch gekennzeichnet, daß** die Auswerteschaltung (60) im Handgerät (14) mit einem Einschaltknopf (22) verbunden ist, der insbesondere eine Tastfunktion aufweist, und der an eine Steuerleitung ein Softstartsignal abgibt, wenn der Einschaltknopf (22) betätigt wird.

6. Lichthärtgerät nach einem der vorhergehenden Ansprüche, **dadurch gekennzeichnet, daß** ein Regelschaltkreis (38) in der Speisestation (12) eine Steuerkennlinie aufweist, die beginnend bei einem Softstartwert die Ausgangsspannung (54), die über das Kabel (16) der Lichtquelle (24) zuleitbar ist, mit ansteigender Regelspannung linear ansteigen läßt.

7. Lichthärtgerät nach Anspruch 6, **dadurch gekennzeichnet, daß** die Steilheit der Regelung des Regelschaltkreises (38) für die Ansteuerung des Regelelements (46) etwas größer als 1 ist.

8. Lichthärtgerät nach einem der vorhergehenden Ansprüche, **dadurch gekennzeichnet, daß** die Leistungsregelung des Handgeräts (14) auch unterschiedliche Kabellängen für das Kabel (16) zwischen Handgerät (14) und Speisestation (12) ausregelt.

9. Lichthärtgerät nach einem der vorhergehenden Ansprüche, **dadurch gekennzeichnet, daß** das Regelelement (46) eine geregelte Ausgangsspannung (54) an das Kabel (16) abgibt und daß eine Hilfs-Speisespannung (42) für ein Gebläse (26) des Handgeräts (14) und insbesondere auch für weitere Hilfselemente (66) unabhängig von der geregelten Ausgangsspannung (54) über das Kabel (16) dem Handgerät (14) zuführbar ist.

10. Lichthärtgerät nach einem der vorhergehenden Ansprüche, **dadurch gekennzeichnet, daß** die Auswerteschaltung (60) einen Ausgangsanschluß für das Gebläse (26) aufweist, mit welchem die Einschaltdauer des Gebläses (26) für die Kühlung der Lichtquelle (24) nach der aufsummierten - gegebenenfalls unterbrochenen - Einschaltdauer der Lichtquelle (24) berechenbar und festlegbar ist.

11. Lichthärtgerät nach einem der vorhergehenden Ansprüche, **dadurch gekennzeichnet, daß** die Kalibriereinrichtung (80) beim Abgleich alle toleranzrelevanten Bauteile des Handgeräts (14) erfaßt und die Kalibrierdaten in einer Speichervorrichtung der Kalibriereinrichtung, insbesondere in einem EEPROM, ablegbar sind und daß jedes Handgerät (14) unabhängig von der Länge des Kabels (16) zwischen Speisestation (12) und Handgerät (14) kalibrierbar ist.

12. Lichthärtgerät nach einem der vorhergehenden Ansprüche, **dadurch gekennzeichnet, daß** die Auswerteschaltung (60) eine Signalisierungseinrichtung (62) aufweist, die zum Lampenwechsel auffordert, wenn der Innenwiderstand der Lichtquelle (24) außerhalb eines vorgegebenen Schwellenwerts ist.

13. Lichthärtgerät nach Anspruch 12, **dadurch gekennzeichnet, daß** der Schwellenwert einem Wert der geregelten Ausgangsspannung (54) entspricht, der die Größe der Regelvorspannung (39) zuzüglich des minimalen Spannungsabfalls des Regelelements (FET 46) beträgt.

## Claims

1. A light curing apparatus for the photopolymerisation of dental compounds, having a hand-operated device with a light source, which is connected via a cable to a supply station, wherein the cable is connected to the hand-operated device and to the supply station in particular in a plug-in manner, and having a control means for the light source for providing uniform light emission, wherein the control means is in the form of a power control with a predetermined desired output, **characterised in that** the cable (16) is arranged in the control circuit of the control means, and **in that** the control means suppresses the switching-on of the light-curing apparatus (10) or emits a signal if the desired output requires a voltage which exceeds a control bias voltage (39) minus a voltage drop of a control element (FET 46), or requires a corresponding current.

2. A light curing apparatus according to Claim 1, **characterised in that** the control means has a voltage sensor (72) for detecting the terminal voltage of the light source (24) and a current sensor (70) for detecting the light-source current, the signals of which can be fed via an evaluation circuit (60) to a control line (44) which extends through the cable (16).

3. A light curing apparatus according to any one of the preceding Claims, **characterised in that** the supply station (12) has a control circuit (38) which in particular is in the form of a switching controller and activates the control element (FET 46) and is connected to a control line (44) which extends through the cable (16).

4. A light curing apparatus according to any one of the preceding Claims, **characterised in that** the hand-operated device (14) has a calibrating device (80) which is provided for calibrating the current sensor (70), the voltage sensor and the evaluation circuit (60), in particular a digital-to-analogue converter in the evaluation circuit (60).

5. A light curing apparatus according to any one of the preceding Claims, **characterised in that** the evaluation circuit (60) in the hand-operated device (14) is connected to an on-button (22) which has in particular a keying function and which emits to a control line a soft-start signal when the on-button (22) is operated.

6. A light curing apparatus according to any one of the preceding Claims, **characterised in that** a control circuit (38) in the supply station (12) has a control characteristic which, beginning with a soft-start value, allows the output voltage (54), which can be fed to the light source (24) via the cable (16), to increase linearly with increasing control voltage.

7. A light curing apparatus according to Claim 6, **characterised in that** the slope of the control of the control circuit (38) for actuating the control element (46) is slightly greater than 1.

8. A light curing apparatus according to any one of the preceding Claims, **characterised in that** the power control of the hand-operated device (14) also corrects different cable lengths for the cable (16) between the hand-operated device (14) and the supply station (12).

9. A light curing apparatus according to any one of the preceding Claims, **characterised in that** the control element (46) emits a regulated output voltage (54) to the cable (16), and **in that** an auxiliary supply voltage (42) for a blower (26) of the hand-operated device (14) and in particular also Further auxiliary elements (66) can be fed via the cable (16) to the hand-operated device (14) independently of the regulated output voltage (45)

10. A light curing apparatus according to any one of the preceding Claims, **characterised in that** the evaluation circuit (60) has an output connection for the blower (26), with which the on-period of the blower (76) for cooling the light source (24) can be calculated and determined according to the totalised (optionally interrupted) on-period of the light source (24).

11. A light curing apparatus according to any one of the preceding Claims, **characterised in that**, during adjustment, the calibrating device (80) registers all tolerance-relevant components of the hand-operated device (14) and the calibration data can be saved in a storage device of the calibrating device, in particular in an EEPROM, and **in that** each hand-operated device (14) can be calibrated independently of the length of the cable (16) between the supply station (12) and the hand-operated device (14).

12. A light curing apparatus according to any one of the preceding Claims, **characterised in that** the evaluation circuit (60) has a signalling device (62) which prompts a bulb change when the internal resistance of the light source (24) is outside the predetermined threshold value.

13. A light curing apparatus according to Claim 12, **characterised in that** the threshold value corresponds to a value of the regulated output voltage (54) which amounts to the magnitude of the control bias voltage (39) plus the minimum voltage drop of the control element (FET 46).

## Revendications

1. Appareil de photodurcissement, en particulier pour la photopolymérisation de pâtes dentaires, comprenant un appareil manuel avec une source de lumière, qui est relié par un câble à une station d'alimentation, le câble étant raccordé, en particulier par enfichage, à l'appareil manuel et à la station d'alimentation, et comprenant une régulation de la source de lumière aux fins de fournir une quantité de lumière constante, la régulation étant réalisée sous forme de régulation de puissance avec une puissance de consigne prédéterminée, **caractérisé en ce que** le câble (16) est disposé dans le circuit de réglage de la régulation et que la régulation bloque une mise en marche de l'appareil de photodurcissement (10) ou délivre un signal lorsque la puissance de consigne nécessite une tension qui dépasse une tension de polarisation de réglage (39) moins une chute de tension d'un élément de réglage (TEC 46), ou un courant correspondant.

2. Appareil de photodurcissement selon la revendication 1, **caractérisé en ce que** la régulation comporte un détecteur de tension (72) pour détecter la tension aux bornes de la source de lumière (24) et un détecteur de courant (70) pour détecter le courant de la source de lumière, dont les signaux peuvent être transmis par l'intermédiaire d'un circuit d'évaluation (60) à une ligne de commande (44) qui passe à travers le câble (16).

3. Appareil de photodurcissement selon l'une des revendications précédentes, **caractérisé en ce que** la station d'alimentation (12) comporte un circuit de réglage (38) qui est réalisé en particulier sous forme de régulateur de commutation et commande l'élément de réglage (TEC 46) et est relié à une ligne de commande (44) qui passe à travers le câble (16).

4. Appareil de photodurcissement selon l'une des revendications précédentes, **caractérisé en ce que** l'appareil manuel (14) comporte un dispositif de calibrage (80) qui est équipé pour le calibrage du détecteur de courant (70), du détecteur de tension et du circuit d'évaluation (60), en particulier d'un convertisseur numérique/analogique dans le circuit d'évaluation (60).

5. Appareil de photodurcissement selon l'une des revendications précédentes, **caractérisé en ce que** le circuit d'évaluation (60) dans l'appareil manuel (14) est relié à un bouton de marche (22) qui présente en particulier une fonction de touche et qui délivre à une ligne de commande un signal de démarrage doux lorsque ledit bouton de marche (22) est actionné.

6. Appareil de photodurcissement selon l'une des revendications précédentes, **caractérisé en ce qu'**un circuit de réglage (38) dans la station d'alimentation (12) présente une caractéristique de commande qui, à partir d'une valeur de démarrage doux, fait augmenter la tension de sortie (54), qui peut être amenée par le câble (16) à la source de lumière (24), de manière linéaire avec la croissance de la tension de réglage.

7. Appareil de photodurcissement selon la revendication 6, **caractérisé en ce que** la pente de la régulation du circuit de réglage (38) pour la commande de l'élément de réglage (46) est légèrement supérieure à 1.

8. Appareil de photodurcissement selon l'une des revendications précédentes, **caractérisé en ce que** la régulation de puissance de l'appareil manuel (14) règle également des longueurs différentes du câble (16) entre l'appareil manuel (14) et la station d'alimentation (12).

9. Appareil de photodurcissement selon l'une des revendications précédentes, **caractérisé en ce que** l'élément de réglage (46) délivre une tension de sortie (54) régulée au câble (16) et qu'une tension d'alimentation auxiliaire (42) pour un ventilateur (26) de l'appareil manuel (14) et en particulier également pour d'autres éléments auxiliaires (66) peut être transmise à l'appareil manuel (14) par le câble (16), indépendamment de la tension de sortie (54) régulée.

10. Appareil de photodurcissement selon l'une des revendications précédentes, **caractérisé en ce que** le circuit d'évaluation (60) comporte une borne de sortie pour le ventilateur (26) avec laquelle on peut calculer et déterminer la durée de fonctionnement du ventilateur (26) pour le refroidissement de la source de lumière (24) d'après la durée de marche cumulée, éventuellement interrompue, de la source de lumière (24).

11. Appareil de photodurcissement selon l'une des revendications précédentes, **caractérisé en ce que** le dispositif de calibrage (80), lors de l'égalisation, mesure tous les composants relevant de tolérances de l'appareil manuel (14) et les données de calibrage peuvent être stockées dans un dispositif de mémorisation du dispositif de calibrage, en particulier dans une EEPROM, et que chaque appareil manuel (14) peut être calibré quelle que soit la longueur du câble (16) entre la station d'alimentation (12) et l'appareil manuel (14).

12. Appareil de photodurcissement selon l'une des revendications précédentes, **caractérisé en ce que** le circuit d'évaluation (60) comporte un dispositif de signalisation (62) qui signale la nécessité d'un changement de lampe lorsque la résistance intérieure de la source de lumière (24) se situe à l'extérieur d'une valeur seuil prédéterminée.

13. Appareil de photodurcissement selon la revendication 12, **caractérisé en ce que** la valeur seuil correspond à une valeur de la tension de sortie (54) régulée qui représente la valeur de la tension de polarisation de réglage (39) plus la chute de tension minimale de l'élément de réglage (TEC 46).
